# EUROPEAN PATENT SPECIFICATION

(11) **EP 2 263 134 B1**
(45) Date of publication and mention of the grant of the patent: **02.01.2019**
(21) Application number: 08807936.3
(22) Date of filing: 09.10.2008
(51) Int. Cl.: G06F 3/0488, G06F 1/16, G06F 3/01, G06F 3/03, G06F 3/0481

(54) **COMMUNICATION TERMINALS WITH SUPERIMPOSED USER INTERFACE**
KOMMUNIKATIONSENDGERÄTE MIT ÜBERLAGERTER BENUTZEROBERFLÄCHE
TERMINAUX DE COMMUNICATION À INTERFACE UTILISATEUR SUPERPOSÉE

(30) Priority: 08.04.2008 US 99541
(43) Date of publication of application: 22.12.2010
(73) Proprietor: Sony Mobile Communications Inc., Shinagawa-ku Tokyo 140-0002 (JP)
(72) Inventor: KRETZ, Martin, SE-223 52 Lund (SE); GAJDOS, Tom, SE-240 20 Dalby (SE)
(74) Representative: Aera A/S
(86) International application number: PCT/IB2008/054137
(87) International publication number: WO 2009/125258

(56) References cited:
- WO-A-2006/020305
- DE-A1- 10 310 794
- US-A1- 2002 036 618
- US-A1- 2002 140 667
- US-A1- 2008 005 703

## Description

### BACKGROUND

The present invention relates to electronic devices and, more particularly, to user interfaces for electronic devices, and methods and computer program products for providing user interfaces for electronic devices.

Many electronic devices, such as wireless communication terminals (e.g., cellular telephones), personal digital assistants (PDAs), palmtop computers, and the like, include monochrome and/or color display screens that may be used to display webpages, images and videos, among other things. Portable electronic devices may also include Internet browser software that is configured to access and display Internet content. Thus, these devices can have the ability to access a wide range of information content, including information content stored locally and/or information content accessible over a network such as the Internet.

As with conventional desktop and laptop computers, portable electronic devices have been provided with graphical user interfaces that allow users to manipulate programs and files using graphical objects, such as screen icons. Selection of graphical objects on a display screen of a portable electronic device can be cumbersome and difficult, however. Early devices with graphical user interfaces typically used directional keys and a selection key that allowed users to highlight and select a desired object. Such interfaces can be slow and cumbersome to use, as it may require several button presses to highlight and select a desired object.

More recent devices have employed touch sensitive screens that permit a user to select a desired object by pressing the location on the screen at which the object is displayed. However, such devices have certain drawbacks in practice. For example, the digitizer of a touch screen can "drift' over time, so that the touch screen can improperly interpret the location that the screen was touched. Thus, touch screens may have to be recalibrated on a regular basis to ensure that the digitizer is properly interpreting the location of touches.

Furthermore, while the spatial resolution of a touch screen can be relatively high, users typically want to interact with a touch screen by touching it with a fingertip. Thus, the size of a user's fingertip limits the actual available resolution of the touchscreen, which means that it can be difficult to manipulate small objects or icons on the screen, particularly for users with large hands. Furthermore, when using a touchscreen, the user's finger can undesirably block all or part of the display in the area being touched. System designers are faced with the task of designing interfaces that can be used by a large number of people, and thus may design interfaces with icons larger than necessary for most people. Better touch resolution can be obtained by using a stylus instead of a touch screen. However, users may not want to have to use a separate instrument, such as a stylus, to interact with their device.

Some attempts have been made to provide alternate means of interacting with display screens. For example, attempts have been made to use cameras to image hand gestures which are interpreted as commands. For example, one approach uses a camera to recognize when a thumb and forefinger have been joined together, thus creating a new "object" (i.e. the oval region bounded by the user's thumb, forefinger and hand) in the display field. However, in this approach, unless a new "object" is created in the display field, no recognition or control occurs.

Yet another approach uses a touch pad on the back side of a device, opposite the display screen, which a user can touch to select icons on the display screen. A camera positioned away from an electronic device images the user's fingers on the touch pad. The image of the user's fingers is superimposed onto the display screen. However, the resolution of such a system is still limited by the size of the user's fingertip.

US 2002/140667 discloses a portable communications terminal using a video camera as coordinate input device. Various gestures involving several fingers are recognised.

DE 10310794 A1 discloses a miniature mobile phone control unit has a touch screen display (coupled to an input component such as a pen position sensor and showing a symbol representing the in plane input position with a lens magnified size representing the vertical position either directly or inversely when a threshold is passed.

WO 2006/020305 discloses methods and systems for processing touch inputs. In one respect it includes reading data from a multipoint sensing device such as a multipoint touch screen where the data pertains to touch input with respect to the multipoint sensing device, and identifying at least one multipoint gesture based on the data from the multipoint sensing device.

US 2002/036618 A1 discloses a method of detecting and interpreting a path of designated positions. The method concurrently detects a plurality of designated positions on a touch panel, again detects the plurality of designated positions subsequent to a travel of the designated positions, determines the distances between each of the current designated positions and the respective immediately preceding designated positions, treats an immediately preceding designated position, closest to the current designated position of interest, as the immediately preceding designated position of the current designated position of interest, and acquires the path of each designated position, thereby recognizing the paths of the plurality of designated positions that move concurrently. A combination of the paths of the plurality of designated positions is interpreted to identify a designation input by a user, and an operation thus designated is executed.

US 2008/005703 A1 discloses a method that includes executing a gesture with a user-manipulated physical object in the vicinity of a device; generating data that is descriptive of the presence of the user-manipulated object when executing the gesture; and interpreting the data as pertaining to at least one object, such as an object displayed by the device.

### SUMMARY

The invention is set out in the appended set of claims.

In the case where a user's fingers are used as selection pointers, more than one finger can be used to generate a selection command. For example, a circle formed by the user's index finger and thumb can be used as a selection object. Furthermore, multiple fingertips can be interpreted as defining a selection area. The distance of a selection pointer from the camera (i.e. the z-axis) can be used to interpret a selection command. For example, a "button push" selection command can be recognized when the selection pointer is moved close to/away from the camera. It will be further appreciated that a "selection command" can be an intermediate command. For example, a selection command can open a pop-up menu or selection window that permits the user to make a further selection.

The user input management unit may be configured to interpret magnification of the pointing object as a zoom command, and to increase a magnification of an image on the display screen in response to magnification of the pointing object.

The user input management unit may include a software object implemented by the controller.

### BRIEF DESCRIPTION OF THE DRAWINGS

The accompanying drawings, which are included to provide a further understanding of the invention and are incorporated in and constitute a part of this application, illustrate certain examples of the invention. In the drawings:
Figures 1A and 1B are schematic diagrams of an electronic device, such as a portable electronic device, according to some examples of the present invention and an exemplary base transceiver station.
Figure 2 illustrates a possible relationship between a user input management unit, an operating system and application programs in an electronic device configured according to some examples of the invention.
Figure 3 illustrates some methods of using a portable electronic device according to some examples of the present invention.
Figures 4A, 4B, 4C and 4D illustrate some operations that can be performed using a portable electronic device according to some examples of the present invention.
Figures 5A, 5B and 5C illustrate some operations that can be performed using a portable electronic device according to some examples of the present invention.
Figures 6 and 7 illustrate some operations that can be performed using a portable electronic device according to some examples of the present invention.
Figures 8A, 8B and 8C illustrate some operations that can be performed using a portable electronic device according to some examples of the present invention.
Figure 9 is a flowchart illustrating operations in accordance with some examples of the present invention.
Figure 10 a portable electronic device according to some examples of the present invention in further detail.

### DETAILED DESCRIPTION OF EMBODIMENTS OF THE INVENTION

The present invention now will be described more fully with reference to the accompanying drawings, in which examples of the invention are shown. However, this invention should not be construed as limited to the examples set forth herein. Rather, these examples are provided so that this disclosure will be thorough and complete, and will fully convey the scope of the invention to those skilled in the art, as set out in the appended set of claims. Like numbers refer to like elements throughout.

As used herein, the term "comprising" or "comprises" is openended, and includes one or more stated features, integers, elements, steps, components or functions but does not preclude the presence or addition of one or more other features, integers, elements, steps, components, functions or groups thereof. As used herein, the term "and/or" includes any and all combinations of one or more of the associated listed items. Furthermore, as used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation.

The terminology used herein is for the purpose of describing particular examples only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this disclosure and the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Furthermore, "coupled" or "connected" as used herein may include wirelessly coupled or connected.

The present invention may be embodied as methods, electronic devices, and/or computer program products. Accordingly, the present invention may be embodied in hardware (e.g. a controller circuit or instruction execution system) and/or in software (including firmware, resident software, micro-code, etc.), which may be generally referred to herein as a "circuit" or "module". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can electronically/magnetically/optically retain the program for use by or in connection with the instruction execution system, apparatus, controller or device.

Examples according to the present invention are described with reference to block diagrams and/or operational illustrations of methods and communication terminals. In this regard, each block may represent a module, segment, or portion of code, which comprises one or more executable instructions for implementing the specified logical function(s). It is to be understood that each block of the block diagrams and/or operational illustrations, and combinations of blocks in the block diagrams and/or operational illustrations, can be implemented by radio frequency, analog and/or digital hardware, and/or program instructions. These program instructions may be provided to a controller, which may include one or more general purpose processors, special purpose processors, ASICs, and/or other programmable data processing apparatus, such that the instructions, which execute via the controller and/or other programmable data processing apparatus, create means for implementing the functions/acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer-usable or computer-readable medium may be, for example but not limited to, an electronic, magnetic, optical, electromagnetic, or semiconductor system, apparatus, or device. More specific examples (a nonexhaustive list) of the computer-readable medium include the following: hard disks, optical storage devices, magnetic storage devices, a portable computer diskette, a random access memory (RAM), a read-only memory (ROM), an erasable programmable read-only memory (EPROM or Flash memory), and a compact disc read-only memory (CD-ROM).

An electronic device can function as a communication terminal that is configured to receive/transmit communication signals via a wireline connection, such as via a public-switched telephone network (PSTN), digital subscriber line (DSL), digital cable, or another data connection/network, and/or via a wireless interface with, for example, a cellular network, a satellite network, a wireless local area network (WLAN), and/or another communication terminal.

An electronic device that is configured to communicate over a wireless interface can be referred to as a "wireless communication terminal" or a "wireless terminal." Examples of wireless terminals include, but are not limited to, a cellular telephone, personal data assistant (PDA), pager, and/or a computer that is configured to communicate data over a wireless communication interface that can include a cellular telephone interface, a Bluetooth interface, a wireless local area network interface (e.g., 802.11), another RF communication interface, and/or an optical/infra-red communication interface.

A portable electronic device may be portable, transportable, installed in a vehicle (aeronautical, maritime, or land-based), or situated and/or configured to operate locally and/or in a distributed fashion at any other location(s) on earth and/or in space.

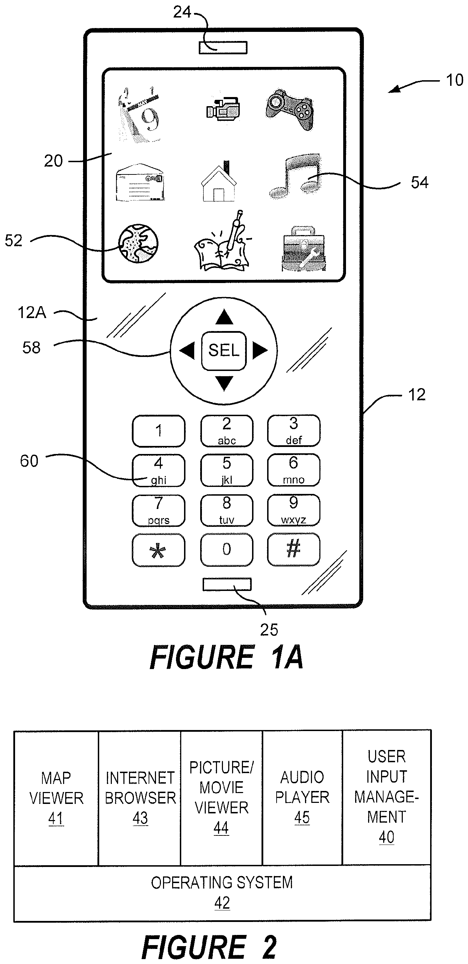

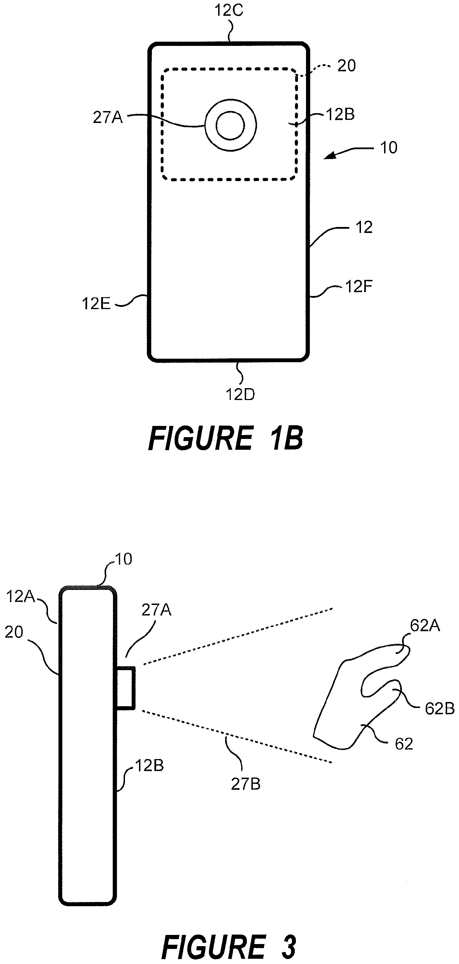

Some examples of the present invention will now be described below with respect to Figures 1-10. Some examples of the present invention provide methods and apparatus that may permit a user to rapidly locate and access stored or remote content by performing string matching on characters input by the user against both automatically stored identifiers (such as URLs or filenames automatically stored in a history list) and user-stored content identifiers, such as stored bookmarks. Some examples of the invention may be particularly useful in connection with a portable electronic device which may have more limited user input capability than a conventional desktop/laptop computer.

Figures 1A and 1B illustrate a portable electronic device 10 according to some embodiments. The portable electronic device 10 includes a housing 12 including a front side 12A on which a display screen 20 is provided. Also provided on the front side 12A of the housing 12 are an alphanumeric keypad 60 and a set of selection keys 58 including direction keys (i.e. up (▲), down (▼), left (◄), and right (►)) and a select key (SEL). The alphanumeric keypad 60 may include a standard 10 digit numeric keypad in which the keys 2-9 are also used for alpha input. However, it will be appreciated that the alphanumeric keypad 60 could include a full QWERTY keyboard, a touchpad with character recognition, or other input device.

Although the portable electronic device 10 is illustrated as having a separate keypad 60, it will be appreciated that the keypad 60 could be implemented as soft keys on a touch-sensitive display screen 20.

As illustrated in Figure 1A, a number of objects 52, such as icons 54, can be displayed on the display screen 20. Each icon can represent an application program, a utility program, a command, a file, and/or other types of objects stored on and/or accessible by the device 10. A user can access a desired program, command, file, etc., by selecting the corresponding icon. For example, an icon can be selected by highlighting the icon using the direction keys and selecting the highlighted icon using the select (SEL) key. Alternative methods of selecting a desired object, such as an icon, on the display screen 20 are described below.

Figure 1B illustrates the reverse side 12B of the portable electronic device 10. As shown therein, a lens 27A of the camera 27 can be mounted on the reverse side 12B of the housing 12. In some examples, the camera lens 27A can be mounted on the housing 12 opposite the display screen 20 so that the center of the lens 27A is aligned with the center of the display screen 20, shown in broken lines in Figure 1B (i.e. so that the center of the lens 27A and the center of the display screen 20 are the same distances from the top 12C, bottom 12D and side 12E, 12F edges of the housing 12. In this manner, when images captured by the camera are superimposed onto an image on the display screen 20, it can appear that the user is "looking through" the device 10 to see objects hidden behind it. However, the camera lens can be offset from the display in some examples.

It will be appreciated that while the camera 27 is shown as integrated within the housing 12, the camera 27 can be separate from the housing 12 and can communicate with the electronic device 10 wirelessly and/or over a wired interface.

The term "superimpose" is used herein to denote that the image captured by the camera 27 is displayed on the display screen 20 at the same time as an object, such as an icon or other image is displayed on the display screen 20. The image that is superimposed on the display screen 20 can appear to be over or under the displayed object, and one or both of the image or the displayed object can be at least partially transparent, so that both the image and the object can be visible at the same location on the display screen 20. It will be appreciated, however, that the image does not have to be a superimposed image. In this user input mode, the background may be completely removed, i.e. transparent. Furthermore, the image the camera records does not have to be used in its original form. For example, it may be transformed into pointers only, or stylized version of fingers with only a shadow where they are, or even a 3D rendering of them.

According to some examples, the electronic device 10 further includes a user input management unit 40 (Figure 2). The user input management unit 40 may be configured to receive and process inputs received through the keypad 60, the selection keys 58 and/or input received through images captured by the camera 27.

As shown in Figure 2, the user input management unit 40 may be implemented as a software module that runs on an operating system 42 of the portable electronic device 10 separately from application software such as a map viewer 41, an Internet browser 43, a picture/movie viewer 44, and/or an audio player 45. Thus, in some examples, the user input management unit 40 may process user input from the keypad 60, selection key 58 and/or the camera 27 for more than one application program running in the portable electronic device 10. The user input management unit 40 may be configured to determine which application program is active when user input is received, and to forward user input commands to the currently active application.

Figure 3 shows the portable electronic device 10 in side view. As the camera lens 27A is on the reverse side 12B of the housing 12, a user can hold the device 10 in one hand and view the display screen 20 while holding his/her other hand 62 behind the device 10 within the field of view 27B of the camera 27. The camera 27 can image the user's hand 62 and use the image of the user's hand 62 to control operation of the device 10 as described in more detail below. In particular, the user input management unit 40 can recognize features of the user's hand 62, such as the tips 62A, 62B of the user's forefinger and thumb. The moving image of the user's hand 62, or an image representing the user's hand, can be superimposed onto the display screen 20, and the identified features of the user's hand can be interpreted as selection pointers by the user input management unit 40, so that movement of the features can be interpreted as input commands for the device 10. In this regard, the user's hand acts as a pointing object. However, other pointing objects, such as prosthetic devices, can be used. It will be appreciated that when the user's hand 62 is held behind the device 10, the user's view of the display screen 20 is not blocked.

To facilitate recognition of the user's hand, it may be desirable for the camera to be configured with a relatively short focal length and a relatively short depth of field (DOF) while operating in a control mode, so that objects in the background appear out of focus, while an object, such as the user's hand, that is held at arm's length or closer to the lens 27A, can remain in focus. Furthermore, the device 10 can be configured to automatically set the DOF to a desired level when entering the control mode. It will be appreciated that DOF can be affected by a number of aspects of camera design and configuration, including aperture size, focal length and magnification. Configuration of a camera to have a desired DOF at a desired focal distance is within the ordinary skill of a camera designer. In some examples, the device 10 can recognize the presence of fingertips in the camera view, and can adjust the camera settings as desired to facilitate image recognition.

In some examples, the camera 27 can be configured to image infrared heat signals, so that the heat signal from a user's hand can be used to generate a thermal image that can be easily distinguished from background heat noise.

Furthermore, object recognition techniques are well known to those skilled in the art and can be used to recognize the presence of a user's hand within the field of view 27B of the camera 27 and track the motion of the user's hand 62 and fingertips 62A, 62B within the field of view 27B. One way of increasing the effectiveness of interpreting fingers is to mark them with color markers, stickers or special gloves.

In some examples, the user input management unit 40 can interpret fingers differently depending on how they are held relative to the camera. For example, when the back of the user's hand is held toward the camera with the user's fingernails showing, a gesture such as a pinching motion over an icon could be interpreted as a command to invoke an object, such as a program or file, associated with the icon. However, when the front of the user's hand is held toward the camera, a similar gesture could be interpreted as a "grab" or "select and hold" command, so that the icon itself could then be moved around the screen.

Accordingly, the user input management unit 40 can be configured to recognize the presence of a pointing object, such as a user's hand 62, within the field of view 27B of the camera 27. The user input management unit 40 can "clip" the pointing object 62 from the image captured by the camera 27 and superimpose the clipped pointing object 62 onto the display screen 20. Alternatively, the user input management unit 40 can display the entire image from the camera 27 on the display screen 20 without clipping. In further examples, the user input management unit 20 can superimpose an object representative of the imaged pointing object onto the display screen. For example, the user input management unit 20 can display a hand-shaped object that is representative of the imaged pointing object. It will be appreciated that when the image of the pointing object 62 is superimposed onto the display screen 20, it can be displayed above or below icons or objects displayed on the display screen 20 from the perspective of a user looking at the display screen 20.

Finger interaction does not have to be limited to a pointer integrated in the user interface (UI). It may be a UI object in itself that even may interact with the UI similarly to the "physical world", e.g. when pointing a finger, an icon moves along with it, with similar physical properties of weight and friction. Furthermore, the Z-axis in the camera may relate to the z-axis position in a 3D UI, e.g. moving the fingers further away moves tha hand lower in the window stack, thus graying out top windows and highlighting the ones below. This effect can provide 3D navigation in a 3D menu (or any 3D application, e.g. a map application)

Furthermore, where the image of the pointing object 62 (or image representative of the pointing object 62) is superimposed over an object, icon, or other image displayed on the display screen, the pointing object 62 can be displayed with a desired level of transparency, so that the object, icon, or other image beneath the pointing object 62 can remain at least partially visible beneath the pointing object 62. In this manner, the objects, icons, and/or other images displayed on the display screen 20 may not be blocked from view by the image of the pointing object 62. It will be appreciated that the image of the pointing object 62 can be treated as a layer that can be provided with a selected level of transparency and inserted above or below other layers of images displayed on the display screen 20. Hereafter, the pointing object 62 will be assumed to be a user's hand. However, as discussed above, it is understood that other types of pointing objects could be used.

While the portable electronic device 10 is illustrated in Figures 1A and 1B as a non-flip-type cellular telephone, it will be appreciated that the device can be a clamshell-type flip phone including an upper housing rotatably attached to a lower housing, a slider-type telephone in which a main housing is slidably attached to an auxiliary housing, or any other structural design.

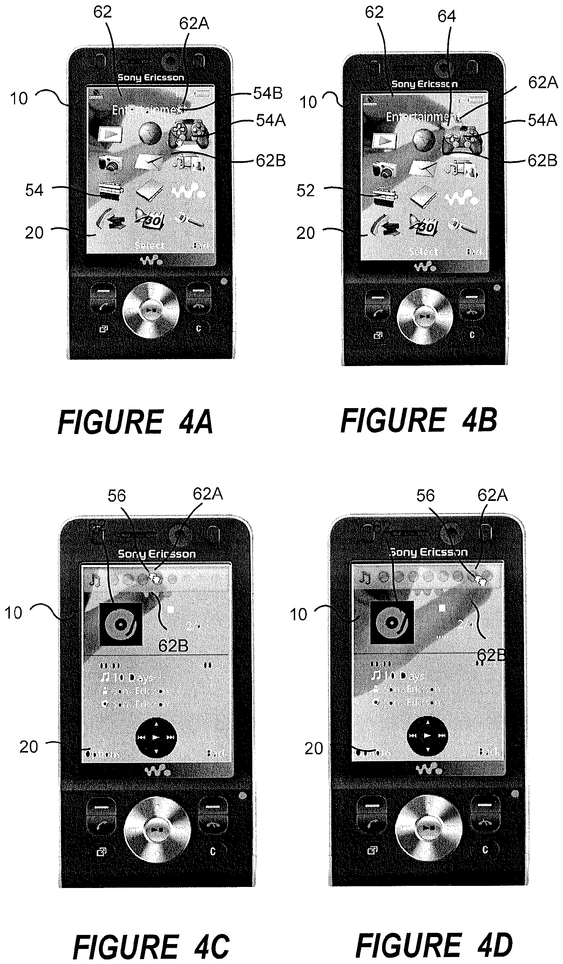

Some operations that can be performed using a device 10 as described above are illustrated in Figures 4A and 4B. As shown therein, a plurality of icons 54 are displayed on the display screen of a device 10 according to some examples. The icons can represent commands, applications, utilities, operating system functions, and/or other features of the device 10. For example, the icons 54 can include an envelope, a camera, a game controller, a calendar, a toolbox, etc. When an icon 54 is selected, the controller 30 can invoke the corresponding application, function, file, or other operation/action that is associated with the icon 54.

As shown in Figure 4A, an image of a user's hand 62 that is captured by the camera 27 is superimposed onto the display screen 20. In Figure 4A, the image of the user's hand 62 is positioned above the background of the displayed image but below the icons 54. The user input management unit 40 recognizes the locations of features, such as fingertips 62A and 62B, of the user's hand 62 as selection pointers, and indicates the position of the selection pointers with an icon 54B, illustrated in Figures 4A and 4B as small hand-shaped icons 54B. When the fingertips 62A, 62B are positioned over a particular icon, such as the game controller icon 54A, the icon 54A is highlighted in some fashion. For example, the icon 54A on/over/behind which the user's fingertips 62A, 62B are positioned can change color, be provided with a "halo" and/or provided with another visual effect. As shown in Figure 4A, when the user's fingertips 62A, 62B are provided on the icon 54A, the size of the icon 54A is made larger relative to the other displayed icons 54.

To select the highlighted icon 54A, the user can make a selection gesture, such as pinching his/her fingertips together. That is, the gesture of pinching the fingertips 62A, 62B together over an icon 52A can be interpreted by the user input management unit as a selection command. When a selection command is interpreted by the user input management unit 40, a selection indication can be displayed. The selection indication can take many different forms. For example, as shown in Figure 4B, the selection can be indicated by displaying a star 64 over the selected icon 52A. Other selection indications are possible. For example, the color, shape or image of the selected icon could be changed momentarily in response to being selected. Any number of selection gestures can be defined, such as pinching finger(s) together, circling thumb and index finger, circling finger(s), drawing a selection area, etc.

Figures 4C and 4D illustrate further operations that can be performed with a device configured according to some examples. In Figures 4C and 4D, the device 10 is executing a music player application. A volume indicator object 52A is shown at the top of the display screen 20. An image of the fingertips 62a, 62B of a user's hand that is captured by a camera 27 having a lens on the opposite side 12A of the housing 12 from the display screen 20 is superimposed onto the image of the music player shown on the screen 20. In this case, the image of the user's fingers 62A, 62B is superimposed over the background of the image on the display screen 20 but behind other objects displayed on the screen, including the volume indicator 52A.

As illustrated in Figure 4C, the user has selected the volume object 52A by positioning his/her fingertips 62A, 62B over the volume object 52A and pinching his/her fingertips 62A, 62B together. Once the volume object is selected, the user can adjust the volume by "dragging" his/her closed fingertips left and right across the volume object. As illustrated in Figure 4D, as the volume is increased, the volume object changes to reflect the increased volume. In some examples, movements that go out of the screen can be interpreted as commands. For example, moving the finger two times out from the screen to where the sound control hard keys usually are, can make the voume control object show up on the screen.

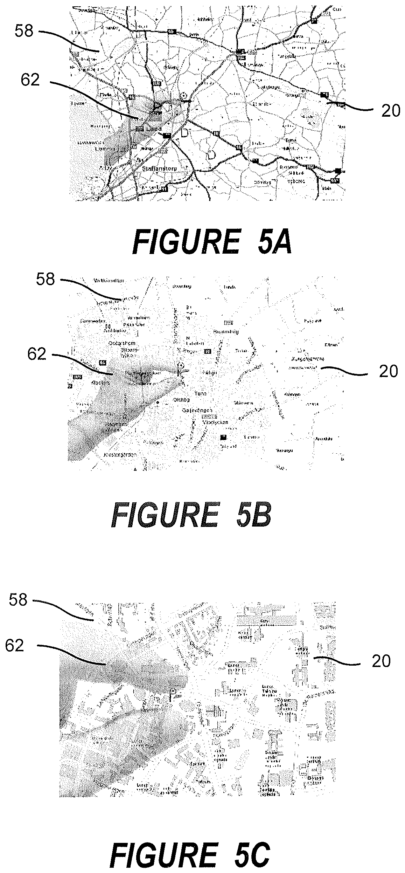

Figures 5A to 5C illustrate further operations that can be performed with a device configured according to some examples, For simplicity, only the image displayed on a display screen 20 of an electronic device 10 is illustrated in Figures 5A to 5C. In the example illustrated in Figures 5A to 5C, a map program is being executed on the device 10. Accordingly, in Figure 5A, the device 10 is displaying a portion of a map 58 on the screen at a first scale, or zoom level. For example, in Figure 5A, the scale is approximately regional-level, with the map showing a number of cities and interconnected roadways.

A user's hand 62 is superimposed onto the map image 58 shown on the display screen 20. As shown in Figure 5A, the image of the user's hand 62 is partially transparent so that features of the map 58 beneath the user's hand 62 can be seen by the user.

The fingertips of the user's hand 62 are interpreted by the user input management unit 62 as selection pointers, so that the map can be manipulated using the locations of the fingertips as anchor points. For example, the map image 58 can be rotated about a point defined by the user's fingertips as the user's hand 62 is rotated.

Referring to Figures 3 and 5B, as the user's hand is moved closer to the camera lens 27A, the apparent size of the user's hand becomes larger. This change in size of the user's hand can be interpreted by the user input management unit 40 as a "zoom" command, and the user input management unit 40 can provide the "zoom" command to the map application, which zooms the image in as the user's hand 62 becomes larger. (It will be appreciated that the direction of the zoom command could be the opposite. That is, the map application could zoom out as the user's hand becomes larger.) As shown in Figure 5B, the map image 58 has been zoomed to have a scale the is approximately city-level in response to an increase in size of the user's hand 62. In Figure 5C, the map image 58 has been zoomed to have a scale the is approximately block-level in response to a further increase in size of the user's hand 62. An auto focus in the camera and/or a proximity sensor can be used to determine the distance to the camera.

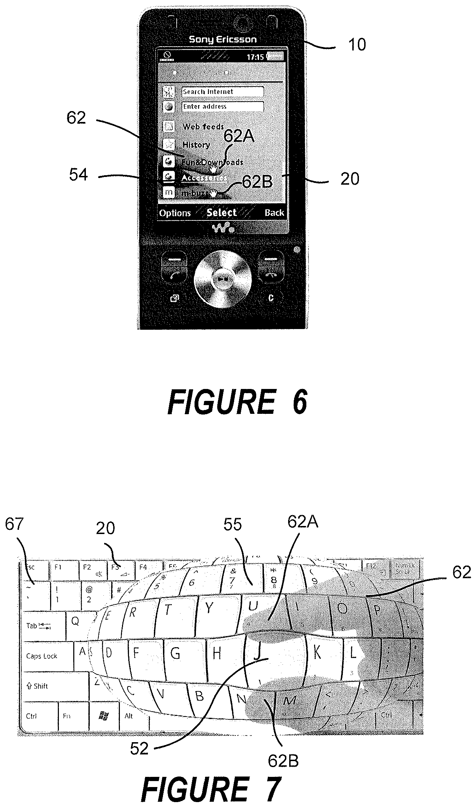

Figure 6 illustrates further operations that can be performed with a device configured according to some examples. As shown therein, a user can interact with other objects on a display screen 20 of a device 10 according to some examples. For example, a user can select a text objet, such as a hyperlink 54, by placing his/her fingertips 62A, 62B above and below the text and then pinching the fingertips 62A, 62B together over the text. As further shown in Figure 6, the portions of the user's fingertips 62A, 62B that are recognized as selection pointers by the user input management unit 40 are identified by hand-shaped symbols.

Figure 7 illustrates further operations that can be performed with a device configured according to some examples. In Figure 7, only a portion of a display screen 20 including a virtual keyboard 67 is shown. A partially transparent image of the user's hand 62 is superimposed over the keyboard 67 by the user input management unit 40. The user's fingertips 62A, 62B are recognized as selection pointers by the user input management unit 40. The area of the keyboard 67 between the user's fingertips (i.e., the selection area) is magnified relative to other portions of the display screen. Furthermore, portions of the keyboard 67 around the selection area are magnified at a level that is proportional, for example inversely proportional, to their distance from the selection area. As a result, portions 55 of the keyboard 67 around the selection area appear to be distorted due to the magnification effect. Magnifying the selection area can make selection of a desired object, such as a key of the keyboard 67, easier for the user.

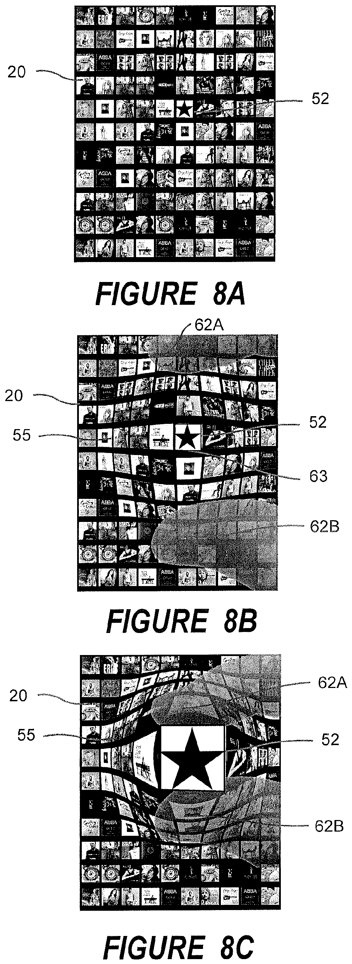

Figures 8A to 8C illustrate similar operations. For example, an array of objects 55 is displayed on a display screen 20. In the example illustrated in Figures 8A to 8C, the objects are album covers corresponding to albums/songs stored in and/or accessible by the device 10. However, any other array of objects could be used. As a selection region 63 between the user's fingertips 62A, 62B hovers over a particular object, the object is magnified relative to the other objects on the display screen 20. Furthermore, portions 55 of the display around the selected object are magnified at a level that is proportional to the distance from the selection area, resulting in distortion of the image on the display screen 20.

Figures 8A to 8C also illustrate that the magnification of the selected object can vary in response to a distance between the user's fingertips 62A, 62B. Accordingly, a user can dynamically change the magnification level of object by decreasing or increasing the distance between the user's fingertips 62A, 62B. For example, in Figure 8B, the user's fingertips 62A, 62B are relatively far apart, resulting in the region between the user's fingertips being magnified a small amount. As the user's fingertips 62A, 62B are moved closer together, as in Figure 8C, the magnification of the region between the fingertips 62A, 62B is increased, potentially making it easier for the user to select a desired object 52.

Many different kinds of user gestures can be interpreted as various commands by the user input management unit 40. For example, the pointing object 62 could be interpreted as a stylus for text and/or drawing entry in a manner that emulates drawing on a physical surface. For example, when the pointing object 62 is held at a first distance from camera 27 (i.e., the "pen is up"), motion of the pointing object 62 is not interpreted as a draw command. When the pointing object 62 is farther away (i.e., "the pen is down"), motion of the pointing object 62 is interpreted as a draw command, and writing can be done.

As a further example, a mobile device configured according to some examples can act as an wireless mouse that can control a remote device. For example, the device 10 can track the motion of the pointing object 62 with the camera 27 and translate movements of the pointing object 62 into mouse movements and/or mouse commands, but instead of displaying the pointing object 62 on the screen 20, the actual commands as well as mouse coordinates corresponding to the location and/or movement of the pointing device 62 can be sent to the remote device.

Other possible applications of examples of the invention include controlling a menu on a television set, sorting pictures on a server using a television monitor as a display, etc.

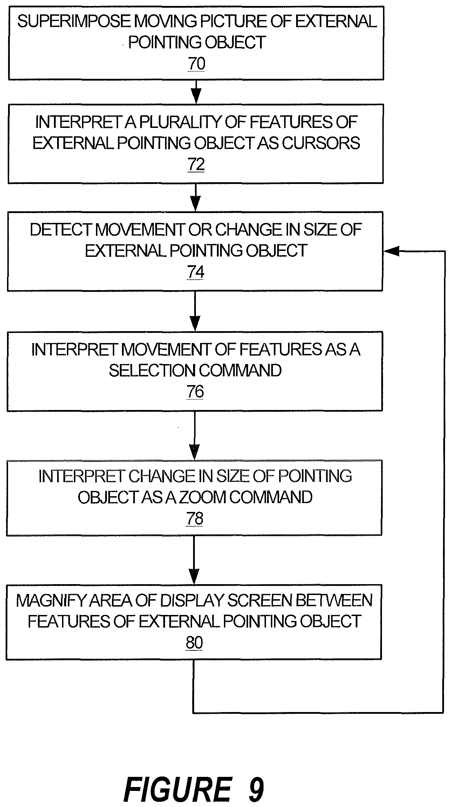

Operations according to some examples are illustrated in Figure 9. As shown therein, a moving picture of a pointing object, such as a user's hand, that is external to an electronic device is superimposed onto a display screen (Block 70). The display screen may concurrently display an object, such as an icon, that can be selected by the user. A plurality of features of the pointing object are interpreted as selection pointers (Block 72).

Further operations detect movement or change in size of the pointing object (Block 74). Movement of the features can be recognized as a selection command (Block 76). For example, as explained above, movement of the features together in a pinching motion over an icon can be interpreted as a command to select the icon. A change in size of the pointing object can be interpreted as a zoom command (Block 78). For example, when the pointing object is imaged by a camera, movement of the pointing object toward or away from the camera can result in an apparent change of size of the pointing object. In response, an image displayed on the display screen along with the image of the pointing object can be zoomed in or out to a different scale. Furthermore, if the back side of the hand is turned towards the camera, it may in some instances be regarded as invisible or not active.

Furthermore, an area of the display screen between features of the pointing object can be magnified (Block 80). In some examples, a region around the area between the features can also be magnified by an amount that is proportional to distance from the area.

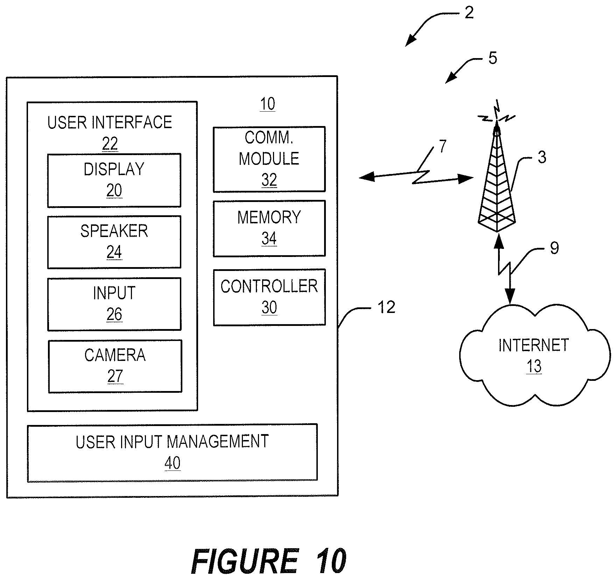

Referring to Figure 10, an exemplary electronic device 10 in accordance with some examples of the present invention is illustrated. It will be appreciated that although examples of the invention are illustrated in connection with a wireless communication terminal, the invention may include wired mobile and/or non-mobile communication terminals and other electronic devices and methods. The portable electronic device 10 can be configured to communicate data with one or more other wireless terminals over a direct wireless communication interface therebetween, over another wireless communication interface through one or more cellular base stations, and/or over another wireless communication interface through a wireless local area network (WLAN) router. It will be appreciated that the portable electronic device 10 need not be a cellular telephone, but could be any other type of portable electronic device that includes a display screen, such as a personal digital assistant (PDA), handheld GPS unit, or other type of electronic device.

The portable electronic device 10 may be a mobile radiotelephone forming a part of a radiotelephone communication system 2 as illustrated in Figure 10. The system 2 includes the portable electronic device 10 and a base transceiver station 3, which is part of a wireless communications network 5. In some examples of the present invention, the base transceiver station 3 includes the radio transceiver(s) that define an individual cell in a cellular network and communicates with the portable electronic device 10 (via an interface 7) and other mobile terminals in the cell using a radio-link protocol. It will be understood that, in some examples of the present invention, many base transceiver stations may be connected through, for example, a mobile switching center and other devices to define the wireless communications network. The base station transceiver 5 may be connected to a data communications network 13, such as the Internet, via a communication link 9. It will be appreciated that the communication link 9 may include elements of the wireless communications network and/or one or more gateways, routers, or other communication nodes.

The portable electronic device 10 in the illustrated examples includes a portable housing assembly 12, a controller circuit 30 ("controller"), a communication module 32, and a memory 34. The portable electronic device 10 further includes a user interface 22 (i.e., a man machine interface) including a display screen 20 and a camera 27. The user interface 22 can further include a speaker 24, and at one or more input devices 26. The input device 26 may include a keyboard, which may be a numerical keyboard including keys that correspond to a digit as well as to one or more characters, such as may be found in a conventional wireless telephone. In some examples, the input device 26 may include a full QWERTY keyboard that may be operated, for example, using thumbs. More than one input device 26 may be included.

The camera 27 can include a digital camera having a CCD (charge-coupled device), CMOS (complementary MOS) or other type of image sensor, and can be configured to record still images and/or moving images and convert the images into a format suitable for display and/or manipulation.

The display screen 20 may be any suitable display screen assembly. For example, the display screen 20 may be a liquid crystal display (LCD) with or without auxiliary lighting (e.g., a lighting panel). In some cases the portable electronic device 10 may be capable of playing video content of a particular quality. For example, a portable electronic device 10 may be configured to display a video stream having a particular aspect ratio, such as 16:9 or 4:3. A number of standard video formats have been proposed for mobile terminals, including Quarter VGA (QVGA, 320x240 pixels), Common Intermediate Format (CIF, 360x288 pixels) and Quarter Common Intermediate Format (QCIF, 180x144 pixels). Moreover, some mobile terminals may have multiple display screens having different display capabilities. Thus, a portable electronic device 10 may be capable of displaying video in one or more different display formats.

The display screen 20 can include a touch-sensitive display screen that is configured to detect touches and convert the detected touches into positional information that can be processed by the controller 30.

The user interface 22 may include any suitable input device(s) including, for example, a touch activated or touch sensitive device (e.g., a touch screen), a joystick, a keyboard/keypad, a dial, a directional key or keys, and/or a pointing device (such as a mouse, trackball, touch pad, etc.). The speaker 24 generates sound responsive to an input audio signal. The user interface 22 can also include a microphone 25 (Fig. 3A) coupled to an audio processor that is configured to generate an audio data stream responsive to sound incident on the microphone.

The controller 30 may support various functions of the portable electronic device 10, and can be any commercially available or custom microprocessor. In use, the controller 30 of the portable electronic device 10 may generate and display an image on the display screen 20. In some examples, however, a separate signal processor and/or video chip (not shown) may be provided in the portable electronic device 10 and may be configured to generate a display image on the display screen 20. Accordingly, the functionality of the controller 30 can be distributed across multiple chips/devices in the portable electronic device 10.

The memory 34 is configured to store digital information signals and data such as a digital multimedia files (e.g., digital audio, image and/or video files).

The communication module 32 is configured to communicate data over one or more wireless interfaces to another remote wireless terminal as discussed herein. The communication module 32 can include a cellular communication module, a direct point-to-point connection module, and/or a WLAN module.

The portable electronic device 10 can include a cellular communication module that allows the device 10 to communicate via the base transceiver station(s) 3 of the network 5 using one or more cellular communication protocols such as, for example, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, and Universal Mobile Telecommunications System (UMTS). The cellular base stations may be connected to a Mobile Telephone Switching Office (MTSO) wireless network, which, in turn, can be connected to a PSTN and/or another network.

A direct point-to-point connection module may include a direct RF communication module or a direct IR communication module. The direct RF communication module may include a Bluetooth module. With a Bluetooth module, the portable electronic device 10 can communicate via an ad-hoc network through a direct point-to-point interface.

With a WLAN module, the wireless terminal 10 can communicate through a WLAN using a communication protocol that may include, but is not limited to, 802.11a, 802.11b, 802.11e, 802.11g, and/or 802.11i.

The communication module 32 can include a transceiver typically having a transmitter circuit and a receiver circuit, which respectively transmit outgoing radio frequency signals (e.g., to the network 5, a router or directly to another terminal) and receive incoming radio frequency signals (e.g., from the network 5, a router or directly to another terminal), such as voice and data signals, via an antenna. The communication module 32 may include a short range transmitter and receiver, such as a Bluetooth transmitter and receiver. The antenna may be an embedded antenna, a retractable antenna or any antenna known to those having skill in the art without departing from the scope of the present invention. The radio frequency signals transmitted between the portable electronic device 10 and the network 5, router or other terminal may include both traffic and control signals (e.g., paging signals/messages for incoming calls), which are used to establish and maintain communication with another party or destination. The radio frequency signals may also include packet data information, such as, for example, cellular digital packet data (CDPD) information. In addition, the transceiver may include an infrared (IR) transceiver configured to transmit/receive infrared signals to/from other electronic devices via an IR port.

The portable electronic device 10 may also be configured to electrically communicate with another terminal via a wireline or cable for the transmission of digital communication signals therebetween.

Although Figure 10 illustrates an exemplary hardware/software architecture that may be used in mobile terminals and/or other electronic devices, it will be understood that the present invention is not limited to such a configuration but is intended to encompass any configuration capable of carrying out operations described herein. For example, although the memory 34 is illustrated as separate from the controller 30, the memory 34 or portions thereof may be considered as a part of the controller 30. More generally, while particular functionalities are shown in particular blocks by way of illustration, functionalities of different blocks and/or portions thereof may be combined, divided, and/or eliminated. Moreover, the functionality of the hardware/software architecture of Figure 10 may be implemented as a single processor system or a multi-processor system in accordance with various examples of the present invention.

Furthermore, elements such as the camera 27 that are shown as integral to the device 10 can be separated from the device 10 with a communication path provided therebetween.

Many different applications/variations will be apparent to a skilled person having knowledge of the present disclosure. In the drawings and specification, there have been disclosed typical examples of the invention and, although specific terms are employed, they are used in a generic and descriptive sense only and not for purposes of limitation, the scope of the invention being set forth in the following claims.

## Claims

1. An electronic device (10) comprising:
a display screen (20);
a camera (27) that is arranged to capture an image of a pointing object (62) that is external to the electronic device (10);
a controller (30) that is coupled to the display screen (20) and that is configured to display an object on the display screen (20) and to superimpose an image representative of the pointing object (62) that is external to the electronic device (10) onto the display screen (20); and
a user input management unit (40) that is coupled to the controller (30) and that is configured to interpret a plurality of features of the pointing object (62) as selection pointers so that a movement of the pointing object (62) relative to the camera (27) is interpreted by the user input management unit (40) as movement of the selection pointers, wherein
the electronic device (10) comprises a housing including a front side and a reverse side opposite the front side, wherein the display screen (20) is positioned on the front side and the camera (27) includes a lens positioned on the reverse side, opposite the front side, at a point on the reverse side corresponding to a center of the display screen (20); and:
the controller (30) is configured to display the object at least partially transparent, to superimpose the image representative of the pointing object (62) onto the display screen (20) so that the image representative of the pointing object appears to be below the object from the perspective of a user looking at the display screen; and to magnify a portion of the object on the display screen (20) in response to a selection region between the selection pointers being moved over the object on the display screen (20).

2. The electronic device (10) according to Claim 1, wherein the user input management unit (40) is configured to interpret movement of the plurality of selection pointers relative to one another as a selection command.

3. The electronic device (10) according to Claim 1, wherein the user input management unit (40) is configured to interpret movement of two of the plurality of selection pointers into contact with each other as a selection command.

4. The electronic device (10) of any one of the preceding claims, wherein a magnification level of the portion of the object on the display screen (20) is determined in response to a spacing between two of the selection pointers.

5. The electronic device (10) according to any one of the preceding claims, wherein portions of the display screen (20) around the object are magnified, and
wherein a level of magnification of portions of the display screen (20) around the object is inversely proportional to a distance from the object.

6. A method of operating an electronic device (10) including a user input device and a display screen (20), wherein the electronic device (10) comprises a housing including a front side and a reverse side opposite the front side, wherein the display screen (20) is positioned on the front side and the camera (27) includes a lens positioned on the reverse side, opposite the front side, at a point on the reverse side corresponding to a center of the display screen (20); the method further including:
superimposing a moving picture of a pointing object (62) that is external to the electronic device (10) onto the display screen (20); wherein the image representative of the pointing object (62) is superimposed onto the display screen (20) so that the image representative of the pointing object (62) appears to be below an object shown in an image on the display screen (20) from the perspective of a user looking at the display screen, which object is at least partially transparent;
interpreting a plurality of features of the pointing object (62) as selection pointers so that a movement of the pointing object (62) relative to the display screen (20) is interpreted as movement of a plurality of selection pointers; and
magnifying a portion of the object on the display screen (20) in response to a selection region between the selection pointers being moved over the object on the display screen (20).

7. The method according to Claim 6, further comprising magnifying portions of the display screen (20) around the object, wherein a level of magnification of portions of the display screen (20) around the object is inversely proportional to a distance from the object.

8. The method according to Claim 6, further comprising interpreting movement of two of the plurality of selection pointers into contact with each other as a selection command.

9. A computer program product for operating a portable electronic device (10) including a user input device and a display screen (20), and wherein the electronic device (10) comprises a housing including a front side and a reverse side opposite the front side, wherein the display screen (20) is positioned on the front side and the camera (27) includes a lens positioned on the reverse side, opposite the front side, at a point on the reverse side corresponding to a center of the display screen (20); the computer program product comprising:
a computer readable storage medium having computer readable program code embodied in said medium, said computer readable program code comprising:
computer readable program code configured to superimpose a moving picture of a pointing object (62) that is external to the electronic device (10) onto the display screen (20); wherein the computer readable program code id configured to superimpose the image representative of the pointing object (62)
onto the display screen (20) so that the image representative of the pointing object (62) appears to be below an object shown in an image on the display screen (20) from the perspective of a user looking at the display screen, which object is at least partially transparent;
computer readable program code configured to interpret a plurality of features of the pointing object (62) as selection pointers so that a movement of the pointing object (62) relative to the display screen (20) is interpreted by the user input management unit (40) as movement of a plurality of selection pointers; and
computer readable program code configured to magnify a portion of the object on the display screen (20) in response to a selection region between the selection pointers being moved over the object on the display screen (20), wherein
a magnification level of the portion of the object on the display screen (20) is determined in response to a spacing between two of the selection pointers.

10. The computer program product according to Claim 9, further comprising computer readable program code configured to interpret movement of two of the plurality of selection pointers into contact with each other as a selection command.

11. The computer program product according to Claim 9, further comprising computer readable program code configured to magnify portions of the display screen (20) around the object, wherein a level of magnification of portions of the display screen (20) around the object is inversely proportional to a distance from the object.

## Patentansprüche

1. Elektronische Vorrichtung (10), Folgendes umfassend:
einen Anzeigebildschirm (20);
eine Kamera (27), die dazu angeordnet ist, ein Bild eines gerichteten Objekts (62) zu erfassen, das sich außerhalb der elektronischen Vorrichtung (10) befindet;
eine Steuerung (30), die an den Anzeigebildschirm (20) gekoppelt ist, und die dazu konfiguriert ist, ein Objekt auf dem Anzeigebildschirm (20) anzuzeigen und einen Anzeigebildschirm (20) mit einem Bild, das repräsentativ für das gerichtete Objekt (62) ist, das sich außerhalb der elektronischen Vorrichtung (10) befindet, zu überlagern; und
eine Nutzereingabemanagementeinheit (40), die an die Steuerung (30) gekoppelt ist, und die dazu konfiguriert ist, eine Vielzahl von Merkmalen des gerichteten Objekts (62) als Auswahlzeiger zu interpretieren, sodass eine Bewegung des gerichteten Objekts (62) relativ zu der Kamera (27) von der Nutzereingabemanagementeinheit (40) als Bewegung der Auswahlzeiger interpretiert wird, wobei
die elektronische Vorrichtung (10) ein Gehäuse umfasst, das eine Vorderseite und eine Rückseite, die der Vorderseite gegenüberliegt, beinhaltet, wobei der Anzeigebildschirm (20) auf der Vorderseite positioniert ist und die Kamera (27) ein Objektiv beinhaltet, das auf der Rückseite, gegenüber der Vorderseite, an einem Punkt auf der Rückseite positioniert ist, der einer Mitte des Anzeigebildschirms (20) entspricht; und:
die Steuerung (30) dazu konfiguriert ist, das Objekt zumindest teilweise durchsichtig anzuzeigen, um den Anzeigebildschirm (20) mit dem Bild, das repräsentativ für das gerichtete Objekt (62) ist, zu überlagern, sodass das Bild, das für das gerichtete Objekt repräsentativ ist, aus der Perspektive eines Benutzers, der auf den Anzeigebildschirm schaut, sich unter dem Objekt zu befinden scheint; und einen Abschnitt des Objekts auf dem Anzeigebildschirm (20) als Reaktion darauf, dass ein Auswahlbereich zwischen den Auswahlzeigern über das Objekt auf dem Anzeigebildschirm (20) bewegt wird, zu vergrößern.

2. Elektronische Vorrichtung (10) nach Anspruch 1, wobei die Nutzereingabemanagementeinheit (40) dazu konfiguriert ist, eine Bewegung der Vielzahl von Auswahlzeigern relativ zueinander als einen Auswahlbefehl zu interpretieren.

3. Elektronische Vorrichtung (10) nach Anspruch 1, wobei die Nutzereingabemanagementeinheit (40) dazu konfiguriert ist, eine Bewegung von zwei der Vielzahl von Auswahlzeigern in Kontakt miteinander als einen Auswahlbefehl zu interpretieren.

4. Elektronische Vorrichtung (10) nach einem der vorangehenden Ansprüche, wobei ein Vergrößerungsgrad des Abschnitts des Objekts auf dem Anzeigebildschirm (20) als Reaktion auf eine Beabstandung zwischen zwei der Auswahlzeiger bestimmt wird.

5. Elektronische Vorrichtung (10) nach einem der vorangehenden Ansprüche, wobei Abschnitte des Anzeigebildschirms (20) um das Objekt vergrößert sind, und
wobei ein Vergrößerungsgrad von Abschnitten des Anzeigebildschirms (20) um das Objekt sich umgekehrt proportional zu einem Abstand von dem Objekt verhält.

6. Verfahren zum Betreiben einer elektronischen Vorrichtung (10), die eine Benutzereingabevorrichtung und einen Anzeigebildschirm (20) beinhaltet, wobei die elektronische Vorrichtung (10) ein Gehäuse umfasst, das eine Vorderseite und eine Rückseite, die der Vorderseite gegenüberliegt, beinhaltet, wobei der Anzeigebildschirm (20) auf der Vorderseite positioniert ist und die Kamera (27) ein Objektiv beinhaltet, das auf der Rückseite, gegenüber der Vorderseite, an einem Punkt auf der Rückseite positioniert ist, der einer Mitte des Anzeigebildschirms (20) entspricht; wobei das Verfahren ferner Folgendes beinhaltet:
Überlagern des Anzeigebildschirms (20) mit einem sich bewegenden Bild eines gerichteten Objekts (62), das sich außerhalb der elektronischen Vorrichtung (10) befindet; wobei der Anzeigebildschirm (20) mit dem Bild, das für das gerichtete Objekt (62) repräsentativ ist, überlagert wird, sodass das Bild, das für das gerichtete Objekt (62) repräsentativ ist, aus der Perspektive eines Benutzers, der auf den Anzeigebildschirm schaut, sich unter einem Objekt zu befinden scheint, das in einem Bild auf dem Anzeigebildschirm (20) gezeigt wird, wobei das Objekt zumindest teilweise durchsichtig ist;
Interpretieren einer Vielzahl von Merkmalen des gerichteten Objekts (62) als Auswahlzeiger, sodass eine Bewegung des gerichteten Objekts (62) relativ zu dem Anzeigebildschirm (20) als Bewegung einer Vielzahl von Auswahlzeigern interpretiert wird; und
Vergrößern eines Abschnitts des Objekts auf dem Anzeigebildschirm (20) als Reaktion darauf, dass ein Auswahlbereich zwischen den Auswahlzeigern über das Objekt auf dem Anzeigebildschirm (20) bewegt wird.

7. Verfahren nach Anspruch 6, ferner umfassend das Vergrößern von Abschnitten des Anzeigebildschirms (20) um das Objekt, wobei ein Vergrößerungsgrad von Abschnitten des Anzeigebildschirms (20) um das Objekt sich umgekehrt proportional zu einem Abstand von dem Objekt verhält.

8. Verfahren nach Anspruch 6, ferner umfassend das Interpretieren einer Bewegung von zwei der Vielzahl von Auswahlzeigern in Kontakt miteinander als einen Auswahlbefehl.

9. Computerprogrammprodukt zum Betreiben einer tragbaren elektronischen Vorrichtung (10), die eine Benutzereingabevorrichtung und einen Anzeigebildschirm (20) beinhaltet, und wobei die elektronische Vorrichtung (10) ein Gehäuse umfasst, das eine Vorderseite und eine Rückseite, die der Vorderseite gegenüberliegt, beinhaltet, wobei der Anzeigebildschirm (20) auf der Vorderseite positioniert ist und die Kamera (27) ein Objektiv beinhaltet, das auf der Rückseite, gegenüber der Vorderseite, an einem Punkt auf der Rückseite positioniert ist, der einer Mitte des Anzeigebildschirms (20) entspricht; wobei das Computerprogrammprodukt Folgendes umfasst:
ein computerlesbares Speichermedium, das computerlesbaren Programmcode aufweist, der in dem Medium ausgeführt ist, wobei der computerlesbare Programmcode Folgendes umfasst:
computerlesbaren Programmcode, der dazu konfiguriert ist, den Anzeigebildschirm (20) mit einem sich bewegenden Bild eines gerichteten Objekts (62), das sich außerhalb der elektronischen Vorrichtung (10) befindet, zu überlagern; wobei der computerlesbare Programmcode dazu konfiguriert ist, den Anzeigebildschirm (20) mit dem Bild, das für das gerichtete Objekt (62) repräsentativ ist, zu überlagern, sodass das Bild, das für das gerichtete Objekt (62) repräsentativ ist, aus der Perspektive eines Benutzers, der auf den Anzeigebildschirm schaut, sich unter einem Objekt zu befinden scheint, das in einem Bild auf dem Anzeigebildschirm (20) gezeigt wird, wobei das Objekt zumindest teilweise durchsichtig ist;
computerlesbaren Programmcode, der dazu konfiguriert ist, eine Vielzahl von Merkmalen des gerichteten Objekts (62) als Auswahlzeiger zu interpretieren, sodass eine Bewegung des gerichteten Objekts (62) relativ zu dem Anzeigebildschirm (20) von der Nutzereingabemanagementeinheit (40) als Bewegung einer Vielzahl von Auswahlzeigern interpretiert wird; und
computerlesbaren Programmcode, der dazu konfiguriert ist, einen Abschnitt des Objekts auf dem Anzeigebildschirm (20) als Reaktion darauf zu vergrößern, dass ein Auswahlbereich zwischen den Auswahlzeigern über das Objekt auf dem Anzeigebildschirm (20) bewegt wird, wobei
ein Vergrößerungsgrad des Abschnitts des Objekts auf dem Anzeigebildschirm (20) als Reaktion auf eine Beabstandung zwischen zwei der Auswahlzeiger bestimmt wird.

10. Computerprogrammprodukt nach Anspruch 9, ferner umfassend computerlesbaren Programmcode, der dazu konfiguriert ist, eine Bewegung von zwei der Vielzahl von Auswahlzeigern in Kontakt miteinander als einen Auswahlbefehl zu interpretieren.

11. Computerprogrammprodukt nach Anspruch 9, ferner umfassend computerlesbaren Programmcode, der dazu konfiguriert ist, Abschnitte des Anzeigebildschirms (20) um das Objekt zu vergrößern, wobei ein Vergrößerungsgrad von Abschnitten des Anzeigebildschirms (20) um das Objekt sich umgekehrt proportional zu einem Abstand von dem Objekt verhält.

## Revendications

1. Dispositif électronique (10) comprenant :
un écran d'affichage (20) ;
une caméra (27) qui est placée pour capter une image d'un objet de pointage (62) qui est à l'extérieur du dispositif électronique (10) ;
un contrôleur (30) qui est couplé à l'écran d'affichage (20) et qui est configuré pour afficher un objet sur l'écran d'affichage (20) et pour superposer une image représentative de l'objet de pointage (62) qui est à l'extérieur du dispositif électronique (10) sur l'écran d'affichage (20) ; et
une unité de gestion de saisie par l'utilisateur (40) qui est couplée au contrôleur (30) et qui est configurée pour interpréter une pluralité de caractéristiques de l'objet de pointage (62) comme pointeurs de sélection de sorte qu'un mouvement de l'objet de pointage (62) par rapport à la caméra (27) soit interprété par l'unité de gestion de saisie par l'utilisateur (40) comme un mouvement des pointeurs de sélection, dans lequel
le dispositif électronique (10) comprend un logement comprenant un côté avant et un côté arrière opposé au côté avant, dans lequel l'écran d'affichage (20) est positionné sur le côté avant et la caméra (27) comprend une lentille positionnée sur le côté arrière, à l'opposé du côté avant, au niveau d'un point sur le côté arrière correspondant à un centre sur l'écran d'affichage (20) ; et :
le contrôleur (30) est configuré pour afficher l'objet au moins partiellement transparent, pour superposer l'image représentative de l'objet de pointage (62) sur l'écran d'affichage (20) de sorte que l'image représentative de l'objet de pointage apparaisse comme étant en dessous de l'objet à partir de la perspective d'un utilisateur regardant l'écran d'affichage ; et pour agrandir une partie de l'objet sur l'écran d'affichage (20) en réponse à une région de sélection entre les pointeurs de sélection qui sont déplacés sur l'objet sur l'écran d'affichage (20).

2. Dispositif électronique (10) selon la revendication 1, dans lequel l'unité de gestion de saisie par l'utilisateur (40) est configurée pour interpréter un mouvement de la pluralité de pointeurs de sélection les uns par rapport aux autres sous forme d'une commande de sélection.

3. Dispositif électronique (10) selon la revendication 1, dans lequel l'unité de gestion de saisie par l'utilisateur (40) est configurée pour interpréter un mouvement de deux de la pluralité de pointeurs de sélection en contact l'un avec l'autre sous forme d'une commande de sélection.

4. Dispositif électronique (10) selon l'une quelconque des revendications précédentes, dans lequel un niveau d'agrandissement de la partie de l'objet sur l'écran d'affichage (20) est déterminé en réponse à un espacement entre deux des pointeurs de sélection.

5. Dispositif électronique (10) selon l'une quelconque des revendications précédentes, dans lequel des parties de l'écran d'affichage (20) autour de l'objet sont agrandies, et
dans lequel un niveau d'agrandissement des parties de l'écran d'affichage (20) autour de l'objet est inversement proportionnel à une distance par rapport à l'objet.

6. Procédé de fonctionnement d'un dispositif électronique (10) comprenant un dispositif de saisie par l'utilisateur et un écran d'affichage (20), dans lequel le dispositif électronique (10) comprend un logement comprenant un côté avant et un côté arrière opposé au côté avant, dans lequel l'écran d'affichage (20) est positionné sur le côté avant et la caméra (27) comprend une lentille positionnée sur le côté arrière, à l'opposé du côté avant, au niveau d'un point sur le côté arrière correspondant à un centre de l'écran d'affichage (20) ; le procédé comprenant également :
la superposition d'une image animée d'un objet de pointage (62) qui est à l'extérieur du dispositif électronique (10) sur l'écran d'affichage (20) ; dans lequel l'image représentative de l'objet de pointage (62) est superposée sur l'écran d'affichage (20) de sorte que l'image représentative de l'objet de pointage (62) apparaisse comme étant en dessous d'un objet illustré dans une image sur l'écran d'affichage (20) à partir de la perspective d'un utilisateur regardant l'écran d'affichage, lequel objet est au moins partiellement transparent ;
l'interprétation d'une pluralité de caractéristiques de l'objet de pointage (62) comme pointeurs de sélection de sorte qu'un mouvement de l'objet de pointage (62) par rapport à l'écran d'affichage (20) soit interprété comme un mouvement d'une pluralité de pointeurs de sélection ; et
l'agrandissement d'une partie de l'objet sur l'écran d'affichage (20) en réponse à une région de sélection entre les pointeurs de sélection qui sont déplacés sur l'objet sur l'écran d'affichage (20).

7. Procédé selon la revendication 6, comprenant également l'agrandissement des parties de l'écran d'affichage (20) autour de l'objet, dans lequel un niveau d'agrandissement des parties sur l'écran d'affichage (20) autour de l'objet est inversement proportionnel à une distance par rapport à l'objet.

8. Procédé selon la revendication 6, comprenant également l'interprétation d'un mouvement de deux de la pluralité de pointeurs de sélection en contact l'un avec l'autre comme une commande de sélection.

9. Produit de programme informatique pour le fonctionnement d'un dispositif électronique portable (10) comprenant un dispositif de saisie par l'utilisateur et un écran d'affichage (20), et dans lequel le dispositif électronique (10) comprend un logement comprenant un côté avant et un côté arrière opposé au côté avant, dans lequel l'écran d'affichage (20) est positionné sur le côté avant et la caméra (27) comprend une lentille positionnée sur le côté arrière, à l'opposé du côté avant, au niveau d'un point sur le côté arrière correspondant à un centre de l'écran d'affichage (20) ; le produit de programme informatique comprenant :
un support de stockage lisible par ordinateur ayant un code de programme lisible par ordinateur intégré dans ledit support, ledit code de programme lisible par ordinateur comprenant :
un code de programme lisible par ordinateur configuré pour superposer une image animée d'un objet de pointage (62) qui est à l'extérieur du dispositif électronique (10) sur l'écran d'affichage (20) ; dans lequel le code de programme lisible par ordinateur est configuré pour superposer l'image représentative de l'objet de pointage (62)
sur l'écran d'affichage (20) de sorte que l'image représentative de l'objet de pointage (62) apparaisse comme étant en dessous d'un objet illustré dans une image sur l'écran d'affichage (20) à partir de la perspective d'un utilisateur regardant l'écran d'affichage, lequel objet est au moins partiellement transparent ;
un code de programme lisible par ordinateur configuré pour interpréter une pluralité de caractéristiques de l'objet de pointage (62) comme pointeurs de sélection de sorte qu'un mouvement de l'objet de pointage (62) par rapport à l'écran d'affichage (20) soit interprété par l'unité de gestion de saisie par l'utilisateur (40) comme un mouvement d'une pluralité de pointeurs de sélection ; et
un code de programme lisible par ordinateur configuré pour agrandir une partie de l'objet sur l'écran d'affichage (20) en réponse à une région de sélection entre les pointeurs de sélection qui sont déplacés sur l'objet sur l'écran d'affichage (20), dans lequel
un niveau d'agrandissement de la partie de l'objet sur l'écran d'affichage (20) est déterminé en réponse à un espacement entre deux des pointeurs de sélection.

10. Produit de programme informatique selon la revendication 9, comprenant également un code de programme lisible par ordinateur configuré pour interpréter un mouvement de deux de la pluralité de pointeurs de sélection en contact l'un avec l'autre comme une commande de sélection.

11. Produit de programme informatique selon la revendication 9, comprenant également un code de programme lisible par ordinateur configuré pour agrandir des parties de l'écran d'affichage (20) autour de l'objet, dans lequel un niveau d'agrandissement des parties sur l'écran d'affichage (20) autour de l'objet est inversement proportionnel à une distance par rapport à l'objet.
